# EUROPÄISCHE PATENTSCHRIFT

(11) **EP 0 610 719 B1**
(45) Veröffentlichungstag und Bekanntmachung des Hinweises auf die Patenterteilung: **07.04.1999**
(21) Anmeldenummer: 94101123.1
(22) Anmeldetag: 26.01.1994
(51) Int. Cl.: C08G 18/83, C08J 11/22

(54) **Verfahren zur Herstellung von Hydroxylgruppen aufweisenden Verbindungen aus (Polyurethan) Polyharnstoffabfällen**
Process for the preparation of hydroxyl group containing compounds from (polyurethane) polyurea waste
Procédé pour la préparation de composés contenant des groupes d'hydroxyle à partir de déchets de polyurée(polyuréthane)

(30) Priorität: 08.02.1993 DE 4303555; 19.07.1993 DE 4324156
(43) Veröffentlichungstag der Anmeldung: 17.08.1994
(73) Patentinhaber: BAYER AG, 51368 Leverkusen (DE)
(72) Erfinder: Münzmay, Thomas, Dr., D-41539 Dormagen (DE); Meckel, Walter, Dr., D-41468 Neuss (DE); Liman, Ulrich, Dr., D-40764 Langenfeld (DE); Nefzger, Hartmut, Dr., D-50259 Pulheim (DE); Rasshofer, Werner, Dr., D-51061 Köln (DE); Dörner, Karl-Heinz, Dipl.-Ing., D-50259 Pulheim (DE); Ruckes, Andreas, Dr., D-51381 Leverkusen (DE)

(56) Entgegenhaltungen:
- EP-A- 0 059 594
- DE-A- 3 042 804
- DE-A- 4 116 700

## Beschreibung

Die Erfindung betrifft ein Verfahren zur Herstellung von für das Polyisocyanat-Polyadditionsverfahren geeigneten, Hydroxylgruppen aufweisenden Verbindungen aus Polyurethan- und/oder Polyurethanpolyharnstoffabfällen durch alkoholytische Zersetzung dieser Kunststoffe und anschließende Weiterreaktion der Alkoholyseprodukte zur Reduktion ihres Gehaltes an niedermolekularen, sterisch ungehinderten, aromatischen Aminen.

Die alkoholytische Zersetzung von nach dem Polyisocyanat-Polyadditionsverfahren hergestellten Kunststoffen ist im Prinzip bekannt. Jedoch ist das Problem der alkoholytischen Zersetzung von Polyurethan- oder Polyurethanpolyharnstoffabfällen unter Wiedergewinnung von brauchbaren Alkoholyseprodukten, insbesondere das Problem der Aufarbeitung von solchen Kunststoffen, die unter Verwendung von Polyisocyanatgemischen der Diphenylmethanreihe und aromatischen Diaminen als Kettenverlängerungsmittel hergestellt worden waren, d.h. von harnstoffgruppenreichen PUR-Abfällen, ungelöst.

Glykolysate von harnstoffgruppenhaltigen bzw. -reichen Polyurethan oder Polyurethanpolyharnstoffabfällen zeichnen sich durch einen relativ hohen Gehalt an niedermolekularen, primären, aromatischen Aminen, insbesondere an sterisch ungehinderten, primären, aromatischen Aminen aus (B. Naber: "Recycling von Polyurethanen (PUR)", Kunststoffrecycling-Tagung der TU Berlin, 01.10.1991).

Dies beeinträchtigt die Wiederverwendbarkeit derartiger Glykolysate im Isocyanat-Polyadditionsprozeß unter Umständen erheblich. Zum einen hat ein hoher Gehalt an niedermolekularen, primären, aromatischen Aminen aufgrund deren hoher Reaktivität einen negativen Einfluß auf die Verarbeitbarkeit derartiger Glykolysate z.B. im Reaktionsspritzgußverfahren (RIM). Dies äußert sich z.B. in zu kurzen Fließwegen, d.h. anspruchsvolle Formen können nicht gefüllt werden.

Zum anderen kann ein zu hoher Gehalt an niedermolekularen, primären, aromatischen Aminen, insbesondere an sterisch ungehinderten, primären, aromatischen Aminen zu einem derartig gestörten Polymeraufbau führen, daß Produkte mit niedrigem Eigenschaftsniveau erhalten werden (hohe Glastemperatur, geringe Reißfestigkeit und Reißdehnung).

In der DE-A 3042804 wird ein Verfahren zur Aufarbeitung von Polyurethanen, Polyurethanabfällen und Ausschußteilen aus Polyurethanen durch chemischen Abbau mittels Erwärmen dieser Materialien auf Temperaturen zwischen 140 °C und 220 °C in Gegenwart von geeigneten Katalysatoren mit Polyolen und/oder Esterkomponenten in einer ersten Stufe und nachfolgende Umwandlung der niedermolekularen Abbauprodukte in makromolekulare Produkte beschrieben. Nachteilig bei diesem Verfahren ist, daß störende, niedermolekulare, primäre aromatische Amine, falls entsprechende Polyurethanabfälle eingesetzt werden, nicht beseitigt werden, und in den Alkoholyseprodukten verbleiben.

Es war daher die der Erfindung zugrundeliegende Aufgabe, ein neues Verfahren zur Herstellung von Hydroxylgruppen aufweisenden Verbindungen aus Polyurethanpolyharnstoff- oder Polyharnstoffabfällen durch alkoholytische Zersetzung zur Verfügung zu stellen, die frei von niedermolekularen, sterisch ungehinderten, primären, aromatischen Aminen oder zumindest in ihrem Gehalt stark reduziert sind.

Diese Aufgabe konnte mit der Bereitstellung des nachstehend näher beschriebenen Verfahrens gelöst werden:

Gegenstand der vorliegenden Erfindung ist daher ein Verfahren zur Herstellung von für das Polyisocyanat-Polyadditionsverfahren geeigneten, Hydroxylgruppen aufweisenden Verbindungen aus Polyurethan- und/oder Polyurethanpolyharnstoffabfällen, das dadurch gekennzeichnet ist, daß
I. in einer ersten Stufe Polyurethan- und/oder Polyurethanpolyharnstoffabfälle mit niedermolekularen Di- und/oder Polyolen und gegebenenfalls höhermolekularen Polyolen bei Temperaturen von 160 bis 260°C umgesetzt werden, wobei vorzugsweise während der Aufheizphase das sich im Reaktionsgefäß befindende Wasser (z.B. eingetragen durch feuchte Ausgangsmaterialien) destillativ entfernt wird, und
II. in einer zweiten Stufe die in der ersten Stufe erhaltenen aminhaltigen Alkoholyseprodukte entweder
   A) bei Temperaturen von 50 bis 180°C, jedoch unterhalb der Alkoholysetemperatur der ersten Stufe, unter Rühren weiterreagiert werden, oder
   B) mit Dialkyldicarbonaten und/oder 1,3-Dicarbonylverbindungen umgesetzt werden.

Die Alkoholysereaktion der ersten Stufe kann nach an sich bekannten Verfahren erfolgen:

### Alkoholyse mit niedermolekularen Di- und/oder Polyolen

Grob gemahlene oder fein zerkleinerte Polyurethan- oder Polyurethanpolyharnstoffabfälle werden (bevorzugt nach Entwässerung) bei Temperaturen von 160 bis 260°C mit niedermolekularen Di- und/oder Polyolen im Gewichtsverhältnis Abfall zu niedermolekularem Di- und/oder Polyol von 10:1 bis 1:10, bevorzugt 5:1 bis 1:3, umgesetzt.

Als niedermolekulare Di- und/oder Polyole kommen z.B. Ethylenglykol, Diethylenglykol und höhere Kondensate, 1,2-Propylenglykol, Dipropylenglykol und höhere Kondensate, Hexandiol, Glyzerin, Trimethylolpropan, sowie deren Ethoxylierungs- und/oder Propoxylierungsprodukte mit Molekulargewichten <350 in Frage.

Gegebenenfalls kann die Alkoholyse in Gegenwart von höhermolekularen Polyolen neben den niedermolekularen Di- und/oder Polyolen durchgeführt werden. Als Makroglykole kommen bevorzugt die aus der PUR-Chemie bekannten Makroglykole aus den Klassen der Polyether, Polyester, Polylactone und Polycarbonate des Molekulargewichtsbereichs 350 bis 4000, bevorzugt 500 bis 2000, mit Funktionalitäten ≥2 in Frage.

Gegebenenfalls können die im Überschuß eingesetzten Di- und/oder Polyole im Anschluß an die alkoholytische Zersetzungsreaktion teilweise destillativ aus den hydroxylgruppenhaltigen Zersetzungspodukten entfernt werden.

Gegebenenfalls können den Alkoholyseprodukten auch vor, während oder nach der alkoholytischen Zersetzungsreaktion zur Viskositätseinstellung Makroglykole des Molekulargewichtsbereichs >500, wie sie aus der Polyurethanchemie an sich bekannt sind, zugesetzt werden.

Nach den oben beschriebenen Alkoholyseverfahren werden Hydroxylgruppen enthaltende Verbindungen erhalten, die noch erhebliche Mengen an freien, sterisch ungehinderten, aromatischen Aminen enthalten, so daß ihr Einsatz im Polyisocyanat-Polyadditionsverfahren erheblich eingeschränkt oder unmöglich ist.

Überraschenderweise wurde nun gefunden, daß der Gehalt an störenden Aminen gemäß Variante A) der zweiten Stufe des erfindungsgemäßen Verfahrens so weit reduziert werden kann, daß wertvolle Produkte gewonnen werden, die sich ausgezeichnet für die Wiederverwendung als Reaktionspartner für Polyisocyanate beim Polyisocyanat-Polyadditionsverfahren eignen.

Variante A) der zweiten Stufe des erfindungsgemäßen Verfahrens kommt ohne Einsatz weiterer Reaktanten aus. Sie besteht darin, daß das Alkoholyseprodukt aus der ersten Stufe bei einer Temperatur unterhalb der Alkoholysetemperatur über einen Zeitraum von 2 bis 24 Stunden weiter gerührt wird. Dabei laufen offenbar Umlagerungsreaktionen ab, durch die störende, freie, sterisch ungehinderte, aromatische Amine zumindest derart sterisch blockiert werden, daß sie beim Einsatz im Polyisocyanat-Polyadditionsverfahren die Polyadditionsprodukte nicht mehr negativ beeinflussen.

Die notwendige Nachreaktionszeit (Rührzeit) hängt von den eingesetzten Kunststoffabfällen und den zur Alkoholyse verwendeten Alkoholen ab. Sie kann durch die Nachreaktionstemperatur beeinflußt werden. Die Nachreaktionstemperatur soll vorzugsweise zwischen 60 und 160°C liegen. Vorzugsweise wird eine Nachreaktionstemperatur, die mindestens 20, besonders bevorzugt mindestens 50°C unterhalb der Alkoholysetemperatur liegt, eingehalten.

Nach der Variante B) der zweiten Stufe des erfindungsgemäßen Verfahrens erfolgt die Weiterreaktion des Alkoholyseprodukts aus der ersten Stufe durch Umsetzung von Dialkyldicarbonaten oder 1,3-Dicarbonylverbindungen.

Gegenüber Variante A) besteht der Vorteil der Variante B) in der niedrigeren erforderlichen Umsetzungstemperatur und dem in der Regel homogeneren Produkt.

Die Reaktion von Dialkyldicarbonaten mit Aminen ist an sich bekannt (z.B. W. Thoma u. H. Genth, Medizin und Chemie 7, 793-801 (1963), Verlag Chemie, Weinheim a.d. Bergstraße).

Die Reaktion von 1,3-Dicarbonylverbindungen, insbesondere von Acetessigesterderivaten mit Aminen ist an sich bekannt (H. Glaser in Houben-Weyl: Methoden der Organischen Chemie, 11/1, Stuttgart (1957)).

Der Literatur ist aber kein Hinweis darauf zu entnehmen, daß diese Reaktion zur Verringerung des Gehaltes an primären, aromatischen Aminen in Alkoholyseprodukten von Polyurethanharnstoff- oder Polyharnstoffabfällen vorteilhaft genutzt werden kann, so daß die resultierenden Produkte ausgezeichnet zur Wiederverwendung im Polyisocyanatpolyadditionsprozeß geeignet sind.

Die Umsetzung der aminhaltigen Alkoholyseprodukte mit Dialkyldicarbonaten erfolgt vorteilhaft bei Temperaturen von 0 bis 100°C, bevorzugt unterhalb 60°C. Die Einsatzmengen an Dialkyldicarbonat werden so bemessen, daß ein Äquivalentverhältnis Dialkyldicarbonat zu Aminogruppen von 1:3 bis 5:1, vorzugsweise 1:1 bis 2:1, resultiert.

Gegebenenfalls können inerte Lösungsmittel wie cyclische Polyether, wie z.B. Tetrahydrofuran oder Dioxan, Dialkylcarbonate wie z.B. Diethyl- oder Dimethylcarbonat oder cyclische Carbonate wie z.B. Ethylen- oder Propylencarbonat zur Verdünnung eingesetzt werden. Besonders vorteilhaft als Lösungsmittel werden Ethanol oder Methanol eingesetzt. Bei Mitverwendung eines Lösungsmittels der obengenannten Art wird es im allgemeinen notwendig sein, diese vor dem emeuten Einsatz der Hydroxylgruppen-aufweisenden Verbindungen im Isocyanatpolyadditionsprozeß destillativ zu entfernen.

Als Dialkyldicarbonate kommen Verbindungen der Formel 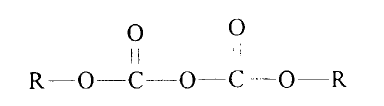 in Frage,
wobei R einen linearen oder verzweigten, gesättigten Kohlenwasserstoffrest mit 1 bis 18 Kohlenstoffatomen repräsentiert, bevorzugt ist R = CH₃, C₂H₅.

Die Umsetzung der aminhaltigen Alkoholyseprodukte mit 1,3-Dicarbonylverbindungen erfolgt vorteilhaft bei Temperaturen von 40 bis 160°C, bevorzugt von 60 bis 140°C. Die Einsatzmengen an 1,3-Dicarbonylverbindungen werden so bemessen, daß ein Äquivalentverhältnis 1,3-Dicarbonylverbindung zu Aminogruppen von 1:3 bis 5:1, vorzugsweise 1:1 bis 2:1 resultiert.

Zur Vervollständigung der Reaktion bzw. zur Beschleunigung der Reaktion ist die Mitverwendung eines Katalysators vorteilhaft. Als Katalysatoren kommen Protonsäuren wie z.B. Chloressigsäure, Trichloressigsäue, Trifluoressigsäure, p-Toluolsulfonsäure, Methansulfonsäure, Schwefelsäure oder Phosphorsäure und ihre Kondensate oder Kationsäuren wie z.B.Bortrifluorid, Zinndichlorid, Eisen(III)chlorid u.ä. in Frage. Die Katalysatoren werden üblicherweise in Mengen von 0,001 bis 10 Gew.-%, bevorzugt 0,01 bis 2 Gew.-%, eingesetzt.

Zur Vervollständigung der Reaktion kann es ebenfalls vorteilhaft sein, das bei der Reaktion gebildete Wasser aus dem Reaktionsgemisch beispielsweise destillativ zu entfernen.

Als 1,3-Dicarbonylverbindungen kommen z.B. 1,3-Diketone wie Pentan-2,4-dion, Dimedon, oder β-Ketocarbonsäurederivate wie z.B. die Veresterungsprodukte der Acetoessigsäure mit Mono-, Di- oder Polyolen wie Methanol, Ethanol, Propanol, Butanol, Ethandiol, 1,2-Propandiol, 1,4-Butandiol, 1,6-Hexandiol, Glyzerin, Trimethylolpropan, Trimethylolethan oder Pentaerythrit in Frage. Besonders bevorzugt sind die Veresterungsprodukte der Acetoessigsäure mit Mono- und Diolen.

In den nachfolgenden Beispielen, die der Erläuterung der Erfindung dienen, werden die folgenden Ausgangsstoffe bzw. Alkoholyseprodukte eingesetzt:

Dabei bedeuten:

| | | |
|---|---|---|
| OH-Z | Hydroxylzahl | [mg KOH/g] |
| NH-Z | Aminzahl | [mg KOH/g] |
| S-Z | Säurezahl | [mg KOH/g] |

### Polyurethanharnstoff A1

Es handelt sich um ein Granulat einer max. Konrgröße von 8 mm aus glasfaserverstärktem Polyurethanharnstoff der Dichte 1,26 g/cm³, hergestellt in Analogie zu Beispiel 2 der DE-PS 2 622 951.

### Glykolysat GI

In einem mit Rührer und Heizmantel ausgestatteten 20 1 Planschlifftopf werden 2,4 kg Diethylenglykol vorgelegt, mit Stickstoff überlagert und auf 220°C vorgeheizt. In das heiße Glykol werden portionsweise 12 kg Al unter Stickstoffüberschleierung eingetragen. Die Zugabe wird so bemessen, daß jederzeit ein rührfähiges Gemisch vorliegt. Nach ca. 9 h Reaktionszeit erhält man ein flüssiges Produkt mit folgenden Daten:
- OH-Z =: 180 mg KOH/g
- NH-Z =: 82 mg KOH/g
- S-Z =: 0,04 mg KOH/g

sterisch gehindertes, primäres, aromatisches Diamin: 3,78 Gew.-%
sterisch ungehindertes, primäres, aromatisches Diamin: 3,80 Gew-%

### Glykolysat GII

In einem mit Rührer und Heizmantel ausgestatteten 20 l-Planschlifftopf werden 8 kg Dipropylenglykol und 4 kg Al vorgelegt und mit Stickstoff überlagert. Die Mischung wird 2 bei 200°C gerührt. Anschließend wird mit 4 kg eines Polyetherpolyols (Desmophen®3973, BAYER AG; OH-Z = 28) verdünnt Anschließend werden unter vermindertem Druck 7 kg Dipropylenglykol abdestilliert. Man erhält ein flüssiges Produkt mit folgenden Daten:
- OH-Z =: 172 mg KOH/g
- NH-Z =: 45 mg KOH/g
- S-Z =: 0,03 mg KOH/g

sterisch gehindertes, primäres, aromatisches Diamin: 1,41 Gew.-%
sterisch ungehindertes, primäres, aromatisches Diamin: 1,66 Gew.-%

### 1,4-Butandioldiacetoacetat Komp. I

In einem 1 l-Vierhalskolben mit Destillationsbrücke werden 650 g Acetessigsäureethylester und 225 g 1,4-Butandiol bei 140°C gerührt. Nach 8 h bei 140°C sind 225 g Ethanol überdestilliert. Man erhält eine dünnflüssige farblose Flüssigkeit.

### Beispiel 1

In einem 20 l-Planschlifftopf mit Rührer und Heizmantel werden 12,4 kg GII und 1290 g 1,4-Butandioldiacetoacetat vorgelegt. Man gibt 0,05 Gew.-% Methansulfonsäure zu und rührt 24 h bei 90°C. Man erhält ein bei Raumtemperatur flüssiges Produkt mit folgenden Daten:
- OH-Z =: 158 mg KOH/g
- NH-Z =: 37 mg KOH/g
- S-Z =: 0,27 mg KOH/g

primäres, sterisch gehindertes, aromatisches Diamin: 0,75 Gew.-%
primäres, sterisch ungehindertes, aromatisches Diamin 0,16 Gew.-%

### Beispiel 2

In einem 20 l-Planschlifftopf mit Rührer und Heizmantel werden 13,2 kg GI und 3,065 kg 1,4-Butandioldiacetoacetat vorgelegt. Man gibt 0,05 Gew.-% Methansulfonsäure zu und rührt 12 h bei 95°C. Man erhält ein bei Raumtemperatur flüssiges Produkt mit folgenden Daten:
- OH-Z =: 162 mg KOH/g
- NH-Z =: 74 mg KOH/g
- S-Z =: 0,35 mg KOH/g

primäres, sterisch gehindertes, aromatisches Diamin: 0,45 Gew.-%
primäres, sterisch ungehindertes, aromatisches Diamin: 0,16 Gew.-%

### Beispiel 3

In einem 20 1-Planschlifftopf mit Rührer und Heizmantel werden 14,5 kg GII und 2,55 kg Acetessigsäureethylester vorgelegt. Man gibt 0,02 Gew.-% Methansulfonsäure zu und rührt 12 h bei 90 bis 100°C. Es werden weitere 0,9 kg Acetessigsäureethylester zugegeben und weitere 6 h bei 90°C und leichtem Vakuum gerührt. Man erhält ein bei Raumtemperatur flüssiges Produkt mit folgenden Daten:
- OH-Z =: 160 mg KOH/g
- NH-Z =: 59 mg KOH/g
- S-Z =: 0,31 mg KOH/g

primäres, sterisch gehindertes, aromatisches Diamin: 0,15 Gew.-%
primäres, sterisch ungehindertes, aromatisches Diamin: <0,1 Gew.-%

### Beispiel 4

In einem 3,6 l-Planschlifftopf mit Rührer und Heizmantel werden 2,5 kg GI bei 30°C vorgelegt und 490 g Dimethyldicarbonat innerhalb von 90 Min. zugetropft. Nach weiteren 90 Min. und Abdestillation von Methanol erhält man ein viskoses Produkt mit folgenden Daten:
- OH-Z =: 155 mg KOH/g
- NH-Z =: 12 mg KOH/g
- S-Z =: 0,06 mg KOH/g

sterisch gehindertes, primäres, aromatisches Diamin: 0,17 Gew.-%
sterisch ungehindertes, primäres, aromatisches Diamin: <0,03 Gew.-%

### Beispiel 5

In einem 20 l-Planschlifftopf mit Rührer und Heizmantel werden 16 kg GII bei 140°C mit Stickstoff überschichtet und gerührt. Der Gehalt an freiem, sterisch ungehindertem, aromatischem Diamin wird jeweils nach den in der nachfolgenden Tabelle angegebenen Zeit wie folgt mittels HPLC-Analyse ermittelt:

| Nachreaktionszeit | Diamin-Gehalt |
|---|---|
| 0 Stunden | 1,66 Gew.-% |
| 1 Stunde | 1,59 Gew-% |
| 2 Stunden | 1,50 Gew.-% |
| 4 Stunden | 1,39 Gew.-% |
| 6 Stunden | 1,23 Gew.-% |
| 8 Stunden | 1,04 Gew.-% |
| 10 Stunden | 0,93 Gew.-% |
| 12 Stunden | 0,77 Gew.-% |
| 14 Stunden | 0,64 Gew-% |
| 16 Stunden | 0,50 Gew.-% |
| 20 Stunden | 0,36 Gew.-% |

### Beispiel 6

In einem 1300 1-Kessel werden 820 kg Dipropylenglykol und 400 kg Al eingetragen. Man erwärmt auf ca. 140°C und destilliert bei 100 mbar im Verlauf von ca. 30 min ca. 15 kg eines Gemisches, bestehend aus Wasser und Dipropylenglykol (Wasseranteil ist abhängig vom Feuchtegrad des Al und liegt bei ca. 30 bis 40 Gew.-%), ab.

Man überlagert das Gemisch mit Stickstoff und rührt bei 210°C für ca. 4 Std.. Dann werden 640 kg Diproylenglykol abdestilliert (150°C, 10 mbar). Nach Abkühlen auf 100°C verdünnt man durch Zugabe von 340 kg eines Polyetherpolyols (Desmophen® 3973, Bayer AG; OH-Z = 28) und erhält ein flüssiges Produkt mit folgenden Daten:
- OHZ =: 180 mg KOH/g
- NHZ =: 30 mg KOH/g
- S-Z =: 0,02 mg KOH/g

sterisch gehindertes, primäres, aromatisches Diamin: 0,5 Gew.-%
sterisch ungehindertes, primäres, aromatisches Diarnin: 0,55 Gew.-%

## Patentansprüche

1. Verfahren zur Herstellung von für das Polyisocyanat-Polyadditionsverfahren geeigneten, Hydroxylgruppen aufweisenden Verbindungen aus Polyurethanpolyharnstoff- und/oder Polyharnstoffabfällen, dadurch gekennzeichnet, daß
I. in einer ersten Stufe Polyharnstoff- und/oder Polyurethanpolyharnstoffabfälle mit niedermolekularen Di- und/oder Polyolen mit Molekulargewichten von <350 und gegebenenfalls höhermolekularen Polyolen mit Molekulargewichten von 350 - 4000 bei Temperaturen von 160 bis 260 °C umgesetzt werden und
II. in einer zweiten Stufe die in der ersten Stufe erhaltenen aminhaltigen Alkoholyseprodukte entweder
A) bei Temperaturen von 50 bis 180°C, jedoch unterhalb der Alkoholysetemperatur der ersten Stufe, unter Rühren weiterreagiert werden, oder
B) mit Dialkyldicarbonaten und/oder 1,3-Dicarbonylverbindungen umgesetzt werden.

2. Verfahren nach Anspruch 1, dadurch gekennzeichnet, daß in der zweiten Stufe A) über einen Zeitraum von 2 bis 24 Stunden gerührt wird.

3. Verfahren nach Anspruch 1 oder 2, dadurch gekennzeichnet, daß die Temperatur in der zweiten Stufe A) 120 bis 160°C beträgt.

4. Verfahren nach Anspruch 1, dadurch gekennzeichnet, daß in der zweiten Stufe B) pro Äquivalent Amin 0,3 bis 5 Äquivalente Dialkyldicarbonat und/oder 1,3-Dicarbonylverbindungen eingesetzt werden.

5. Verfahren nach Anspruch 1 oder 4, dadurch gekennzeichnet, daß die Umsetzung in der zweiten Stufe mit Dialkyldicarbonaten bei 0 bis 100°C, durchgeführt wird.

6. Verfahren nach einem der Ansprüche 1, 4 oder 5, dadurch gekennzeichnet, daß die Umsetzung in der zweiten Stufe mit Dimethyl- und/oder Diethyldicarbonat erfolgt.

7. Verfahren nach Anspruch 1 oder 4, dadurch gekennzeichnet, daß die Umsetzung in der zweiten Stufe mit 1,3-Dicarbonylverbindungen bei einer Temperatur von 40 bis 160°C erfolgt.

8. Verfahren nach einem der Ansprüche 1, 4 oder 7, dadurch gekennzeichnet, daß die Umsetzung in der zweiten Stufe mit 1,3-Dicarbonylverbindungen in Gegenwart von katalytisch wirksamen Mengen an Protonsäuren erfolgt.

9. Verfahren nach einem der Ansprüche 1, 4,7 oder 8, dadurch gekennzeichnet, daß als 1,3-Dicarbonylverbindungen Veresterungsprodukte der Acetoessigsäure mit C₁-C₆-Mono- und/oder Diolen eingesetzt werden.

10. Verwendung der gemäß einem der Ansprüche 1 bis 9 hergestellten Hydroxylgruppen aufweisenden Verbindungen für das Polyisocyanatpolyadditionsverfahren.

## Claims

1. Process for the preparation of hydroxyl group-containing compounds suitable for the polyisocyanate polyaddition process from polyurethane polyurea wastes and/or polyurea wastes, characterised in that
I. in a first stage polyurea wastes and/or polyurethane polyurea wastes are reacted with low molecular weight diols and/or polyols having molecular weights of <350 and optionally higher molecular weight polyols having molecular weights of 350 to 4000 at temperatures of from 160 to 260, and
II. in a second stage the amine-containing products of alcoholysis obtained in the first stage are either
A) reacted further, with stirring, at temperatures of from 50 to 180°C, however below the alcoholysis temperature of the first stage, or
B) are reacted with dialkyl dicarbonates and/or 1,3-dicarbonyl compounds.

2. Process according to Claim 1, characterised in that in the second stage A) stirring takes place for a period of from 2 to 24 hours.

3. Process according to Claim 1 or 2, characterised in that the temperature in the second stage A) is from 120 to 160°C.

4. Process according to Claim 1, characterised in that in the second stage B) from 0.3 to 5 equivalents of dialkyl dicarbonate and/or 1,3-dicarbonyl compounds are used per equivalent of amine.

5. Process according to Claim 1 or 4, characterised in that the reaction in the second stage with dialkyl dicarbonates is carried out at from 0 to 100°C.

6. Process according to any one of Claims 1, 4 and 5, characterised in that the reaction in the second stage takes place with dimethyl dicarbonate and/or diethyl dicarbonate.

7. Process according to Claim 1 or 4, characterised in that the reaction in the second stage takes place with 1,3-dicarbonyl compounds at a temperature of from 40 to 160°C.

8. Process according to any one of Claims 1, 4 and 7, characterised in that the reaction in the second stage with 1,3-dicarbonyl compounds takes place in the presence of catalytic quantities of proton acids.

9. Process according to any one of Claims 1, 4, 7 and 8, characterised in that esterification products of acetoacetic acid with C₁ to C₆-mono- and/or diols are used as 1,3-dicarbonyl compounds.

10. Use of the hydroxyl group-containing compounds prepared according to any one of Claims 1 to 9 for the polyisocyanate polyaddition process.

## Revendications

1. Procédé pour préparer des composés à groupes hydroxy convenant à l'utilisation dans le procédé de polyaddition des polyisocyanates à partir de déchets de polyuréthanes-polyurées et/ou de polyurées, caractérisé en ce que
I. dans un premier stade, on fait réagir les déchets de polyurées et/ou de polyuréthanes-polyurées avec des di- et/ou polyols à bas poids moléculaire, inférieur à 350, et le cas échéant des polyols à haut poids moléculaire : 350 à 4 000, à des températures de 160 à 260°C et
II. dans un deuxième stade, on soumet les produits d'alcoolyse contenant des amines, obtenus au premier stade
A) à réaction complémentaire sous agitation à des températures de 50 à 180°C mais inférieures à la température d'alcoolyse du premier stade, ou bien
B) à réaction avec des dicarbonates de dialkyle et/ou des dérivés 1,3-dicarbonylés.

2. Procédé selon revendication 1, caractérisé en ce que, dans la variante A du deuxième stade, on agite pendant une durée de 2 à 24 h.

3. Procédé selon revendication 1 ou 2, caractérisé en ce que, dans la variante A du deuxième stade, la température est de 120 à 160°C.

4. Procédé selon revendication 1, caractérisé en ce que, dans la variante B du deuxième stade, on utilise de 0,3 à 5 équivalents de dicarbonate de dialkyle et/ou de dérivés 1,3-dicarbonylés par équivalent d'amine.

5. Procédé selon revendication 1 ou 4, caractérisé en ce que la réaction avec les dicarbonates de dialkyle du deuxième stade est réalisée à des températures de 0 à 100°C.

6. Procédé selon l'une des revendications 1, 4 ou 5, caractérisé en ce que la réaction du deuxième stade est réalisée avec du dicarbonate de diméthyle et/ou de diéthyle.

7. Procédé selon revendication 1 ou 4, caractérisé en ce que la réaction du deuxième stade avec les dérivés 1,3-dicarbonylés est réalisée à une température de 40 à 160°C.

8. Procédé selon l'une des revendications 1, 4 ou 7, caractérisé en ce que la réaction du deuxième stade avec des dérivés 1,3-dicarbonylés est réalisée en présence de quantités catalytiques d'acides protoniques.

9. Procédé selon une des revendications 1, 4, 7 ou 8, caractérisé en ce que l'on utilise en tant que dérivés 1,3-dicarbonylés des produits d'estérification de l'acide acétylacétique par des mono- et/ou diols en C₁-C₆.

10. Utilisation des composés à groupes hydroxy préparée selon l'une des revendications 1 à 9 dans le procédé de polyaddition des polyisocyanates.
